(19) Europäisches Patentamt
European Patent Office
Office européen des brevets

(11) EP 2 543 979 A2

(12) EUROPÄISCHE PATENTANMELDUNG

(43) Veröffentlichungstag:
09.01.2013 Patentblatt 2013/02

(51) Int Cl.:
*G01L 9/00* (2006.01)

(21) Anmeldenummer: 12169854.2

(22) Anmeldetag: 29.05.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 06.07.2011 DE 102011106694

(71) Anmelder: Kavlico GmbH
32423 Minden (DE)

(72) Erfinder: Schier, Achim
32479 Hille (DE)

(74) Vertreter: Manitz, Finsterwald & Partner GbR
Martin-Greif-Strasse 1
80336 München (DE)

(54) **Druckmessumformer**

(57) Die Erfindung betrifft einen Druckmessumformer zur Messung eines Drucks mit einer Membran, auf der eine Widerstands-Messbrücke, insbesondere eine Wheatstone'sche Messbrücke, mit druckabhängigen Widerstandselementen aufgebracht ist, wobei die Messbrücke zwei parallel geschaltete Brückenzweige mit jeweils zwei über einen jeweiligen Messanschluss in Reihe geschalteten Widerstandselementen und einen zwischen den beiden Messanschlüssen ausgebildeten Messabgriff für eine Brückenspannung umfasst, wobei in jedem Brückenzweig eines der beiden Widerstandselemente zwei über einen jeweiligen Kontrollanschluss in Reihe geschaltete Widerstandskomponenten aufweist, und wobei zusätzlich ein zwischen den beiden Kontrollanschlüssen ausgebildeter Kontrollabgriff für eine Kontrollspannung vorgesehen ist. Die beiden mit den Kontrollanschlüssen versehenen Widerstandselemente weisen eine gleichgerichtete Druckabhängigkeit auf und die Widerstandselemente sind als eine Dünnschicht aufgebracht.

# Fig. 1

EP 2 543 979 A2

**Beschreibung**

Die vorliegende Erfindung betrifft einen Druckmessumformer zur Messung eines Fluiddrucks mit einer Membran, auf der eine Widerstands-Messbrücke, insbesondere eine Wheatstone'sche Messbrücke, mit druckabhängigen Widerstandselementen aufgebracht ist, wobei die Messbrücke zwei parallel geschaltete Brückenzweige mit jeweils zwei über einen jeweiligen Messanschluss in Reihe geschalteten Widerstandselementen und einen zwischen den beiden Messanschlüssen ausgebildeten Messabgriff für eine Brückenspannung umfasst.

Derartige Druckmessumformer werden in Drucksensoren zur Messung von Drücken von Fluiden, d.h. Flüssigkeiten und/oder Gasen, insbesondere als Bestandteil einer Steuerung oder Regelung in einer technischen Anwendung, beispielsweise im Automobilbereich, eingesetzt. Zur Messung eines Fluiddrucks wird die eine Seite der Membran mit dem zu messenden Fluid beaufschlagt. Die andere Seite der Membran, die dem Fluid abgewandt und auf der die Messbrücke aufgebracht ist, ist einem Referenzdruck, insbesondere dem Umgebungsdruck bzw. hydrostatischen Druck der den Sensor umgebenden Atmosphäre, ausgesetzt. Bei einer Druckdifferenz zwischen ihren beiden Seiten wird die Membran mechanisch ausgelenkt bzw. deformiert. Diese Deformation wird durch die druckabhängigen Widerstandselemente der Messbrücke erfasst und in Form der Brückenspannung ausgegeben, welche das Messsignal des Druckmessumformers darstellt, wobei in an sich bekannter Weise aus dem Wert der Brückenspannung auf den anliegenden Fluiddruck rückgeschlossen werden kann.

Für sicherheitskritische Anwendungen ist es erforderlich, das Messsignal des Druckmessumformers auf mögliche Fehler hin überprüfen zu können. Aus dem Dokument DE 101 14 862 B3 ist es hierzu bekannt, mehrere Messbrücken redundant vorzusehen. Bei eingeschränkten Platzverhältnissen und/oder aufgrund einer Forderung nach minimalen Kosten ist es jedoch häufig nicht möglich, mehrere Messbrücken redundant in einem Druckmessumformer zu verwenden.

Der vorliegenden Erfindung liegt die Aufgabe zugrunde, einen Druckmessumformer der eingangs genannten Art zu schaffen, der kleinbauend und/oder kostengünstig herstellbar und zugleich zuverlässig auf korrekte Funktion hin überprüfbar ist.

Diese Aufgabe wird durch einen Druckmessumformer mit den Merkmalen des Anspruchs 1 gelöst und insbesondere dadurch, dass in jedem Brückenzweig eines der beiden Widerstandselemente zwei über einen jeweiligen Kontrollanschluss in Reihe geschaltete Widerstandskomponenten aufweist, und zusätzlich ein zwischen den beiden Kontrollanschlüssen ausgebildeter Köntrollabgriff für eine Kontrollspannung vorgesehen ist. Insbesondere ist die Messbrücke als eine Vollbrücke mit vier druckabhängigen Widerstandselementen ausgebildet.

Die erfindungsgemäße Messbrücke weist also nicht nur einen, sondern zwei Spannungsabgriffe auf. Neben der Brückenspannung wird zusätzlich auch noch eine insbesondere zu der Brückenspannung ähnliche Kontrollspannung zur Verfügung gestellt. Die Kontrollspannung weicht von der Brückenspannung ab, steht zu dieser jedoch in einer durch den Aufbau der Messbrücke und durch die Widerstandswerte der Widerstandselemente bzw. Widerstandskomponenten vorgegebenen Abhängigkeit. In einer Auswerteeinheit kann die Brückenspannung dann mit der Kontrollspannung verglichen werden. Weicht das Vergleichsergebnis von einem für eine korrekt funktionierende Messbrücke erwarteten Ergebnis ab, kann unmittelbar auf eine defekte Messbrücke bzw. einen defekten Druckmessumformer geschlossen werden, wie dies beispielsweise bei Beschädigung eines oder mehrerer Widerstände der Messbrücke der Fall ist.

Die Auswerteeinheit kann Bestandteil des Druckmessumformers sein, insbesondere zusätzlich zu der Messbrücke auf der Membran angeordnet sein, oder aber separat von dem Druckmessumformer vorgesehen sein, insbesondere als Bestandteil eines Drucksensors, der als weiteren Bestandteil den Druckmessumformer umfasst.

Die beiden Widerstandselemente eines Brückenzweigs bilden einen Spannungsteiler. Die beiden Widerstandskomponenten eines Widerstandselements bilden ebenfalls wiederum einen Spannungsteiler. Die Widerstandselemente werden üblicherweise derart gewählt, dass bei einer Druckdifferenz von Null die Messbrücke zumindest im Wesentlichen abgeglichen ist. Bei einem Widerstandselement und/oder einer Widerstandskomponente kann es sich auch um einen Ersatzwiderstand einer Gruppe von Einzelwiderständen handeln.

Insbesondere gilt Folgendes: Unter dem Merkmal, dass "zusätzlich ein zwischen den beiden Kontrollanschlüssen ausgebildeter Kontrollabgriff für eine Kontrollspannung vorgesehen ist" ist zu verstehen, dass die Messbrücke zusätzlich einen zwischen den beiden Kontrollanschlüssen ausgebildeten Kontrollabgriff für eine Kontrollspannung umfasst, und bei den Messanschlüssen und den Kontrollanschlüssen handelt es sich um Anschlüsse zur externen elektrischen Kontaktierung und/oder Kontaktpads und/oder Bondpads.

Die beiden mit den Kontrollanschlüssen versehenen Widerstandselemente können im Ersatzschaltbild der Wheatstone'schen Messbrücke einander diagonal gegenüberliegend angeordnet sein und/oder eine insbesondere gleichgerichtete Druckabhängigkeit aufweisen. Die beiden mit den Kontrollanschlüssen versehenen Widerstandselemente können als insbesondere aktive Widerstände ganz oder teilweise auf der Deformationsfläche der Membran angeordnet sein. Bevorzugt weisen jeweils die beiden im Ersatzschaltbild einander diagonal gegenüberliegend angeordneten Widerstandselemente eine gleichgerichtete Druckabhängigkeit und/oder jeweils die beiden in demselben Brückenzweig angeordneten Widerstandselemente eine entgegengerichtete Druckabhängigkeit auf. Unter der Formulierung "zwei Widerstandselemente, die eine gleichgerichtete Druckabhängigkeit aufweisen" sind zwei Widerstandselemente zu verstehen, deren Widerstandswerte sich bei einer Druckänderung in die gleiche Richtung ändern, d.h. dass entweder beide Werte zunehmen oder beide Werte abnehmen. Entsprechend sind unter der Formulierung "zwei Widerstandselemente, die eine entgegengerichtete Druckabhängigkeit aufweisen" zwei Widerstandselemente zu verstehen, deren Widerstandswerte sich bei einer Druckänderung in entgegengesetzter Richtung ändern, d.h. dass der eine Wert zunimmt, während der andere Wert abnimmt. Durch die vorstehenden Maßnahmen können besonders hohe Brückenspannungs- und Kontrollspannungssignale erreicht werden, so dass eine besonders genaue Druckmessung und eine besonders zuverlässige Überprüfung der korrekten Funktion des Druckmessumformers möglich ist.

Bevorzugt sind die druckabhängigen Widerstandselemente jeweils als oder wie ein Dehnungsmessstreifen oder nach Art eines Dehnungsmessstreifens ausgebildet. Die Dehnungsmessstreifen können aus einem Metall oder aus einem Halbleiter gefertigt sein. Die Druckabhängigkeit der druckabhängigen Widerstandselemente kann auf einer Änderung des Widerstands durch eine Längen- und Querschnittsänderung der Dehnungsmessstreifen oder auf einer Änderung des Widerstands durch einen piezoresistiven Effekt basieren. Grundsätzlich ist es jedoch auch möglich, dass die druckabhängigen Widerstandselemente als diffundierte Widerstände ausgebildet sind.

Vorzugsweise sind die Widerstandselemente als eine insbesondere gemeinsame Dünnschicht aufgebracht. Die Dünnschicht kann beispielsweise aus Titanoxinitrid gefertigt sein. Die Dünnschicht kann z.B. mittels physikalischer Abscheidung wie Aufdampfen oder Sputtern aufgebracht werden.

Die Erfindung betrifft ferner einen Drucksensor mit einem Druckmessumformer, wie er vorstehend beschrieben ist.

Neben dem Druckmessumformer umfasst der Drucksensor bevorzugt eine Auswerteeinheit, die dazu ausgebildet ist, die Brückenspannung mit der Kontrollspannung zu vergleichen und anhand des Ergebnisses des Vergleichs die korrekte Funktion des Druckmessumformers zu überprüfen. Dem Vergleich kann eine mathematische insbesondere lineare Gleichung mit wenigstens einer Konstanten zugrunde gelegt werden, die in der Auswerteeinheit hinterlegt ist/ sind. Wie bereits vorstehend erläutert kann die Auswerteeinheit auch direkter Bestandteil des Druckmessumformers sein.

Vorteilhafte Ausführungsformen der Erfindung sind auch in den Unteransprüchen, der Figurenbeschreibung und der Zeichnung angegeben.

Die Erfindung wird im Folgenden beispielhaft unter Bezugnahme auf die Zeichnung beschrieben. Es zeigen,

Fig. 1 ein Schaltbild einer Wheatstone'schen Messbrücke eines erfindungsgemäßen Druckmessumformers, und

Fig. 2 ein Layout der Wheatstone'sche Messbrücke gemäß Fig. 1 gemäß einer erfindungsgemäßen Ausführungsform.

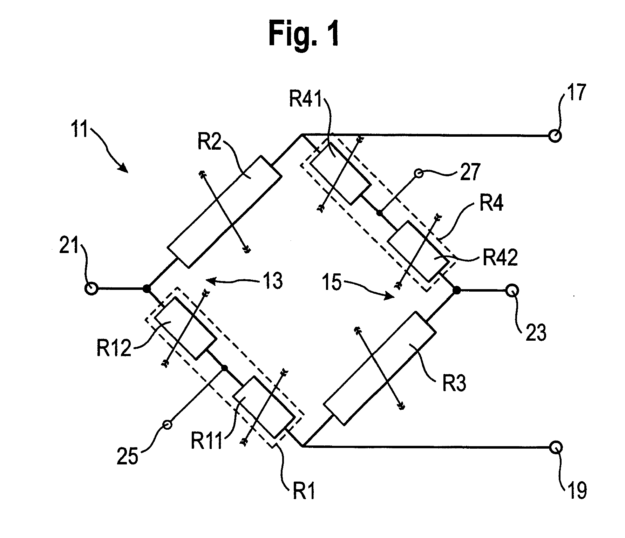

Die in Fig. 1 dargestellte Wheatstone'sche Messbrücke 11 ist auf einer in Fig. 1 nicht dargestellten mechanisch auslenkbaren Membran aufgebracht. Die Messbrücke 11 und die Membran sind Bestandteil eines Druckmessumformers, der in einem Drucksensor untergebracht ist. Der Druckmessumformer bzw. Drucksensor umfasst einen starren Grundkörper, der einen darin insbesondere zentral ausgebildeten, einseitig durch die Membran begrenzten Fluidkanal aufweist. Die Membran kann einstückig mit oder separat von dem Grundkörper ausgebildet sein. Die Membran kann beispielsweise aus Metall, vorzugsweise Stahl, oder Keramik gebildet sein. Der Drucksensor weist in Richtung der offenen Seite des Fluidkanals entweder einen funktionalen Anschluss auf, mit dem der Drucksensor an ein Fluidgehäuse angekoppelt werden kann, oder einen Anschlussbereich für ein entsprechendes Koppelstück, z.B. einen Schweißport. Ansonsten ist der Druckmessumformer bzw. der Drucksensor wie vorstehend zum Stand der Technik erläutert ausgebildet, um den Druck eines die der Messbrücke 11 gegenüberliegende Seite der Membran beaufschlagenden Fluids zu messen.

Die Messbrücke 11 umfasst eine ersten Brückenzweig 13 und einen zweiten Brückenzweig 15, die jeweils zwischen zwei Anschlüssen 17, 19 einer Spannungsversorgung U0 der Messbrücke 11 und parallel zueinander geschaltet sind. Der erste Brückenzweig 13 umfasst zwei in Reihe geschaltete elektrische Widerstandselemente R2 und R1, die über einen ersten Messanschluss 21 miteinander verbunden sind. Der zweite Brückenzweig 15 umfasst zwei weitere, ebenfalls in Reihe geschaltete elektrische Widerstandselemente R4 und R3, die über einen zweiten Messanschluss 23 miteinander verbunden sind. An den beiden Messanschlüssen 21 und 23 kann eine Brückenspannung U abgegriffen werden, wobei

$$U = U0 \frac{(R2 * R3) - (R4 * R1)}{(R1 + R2) * (R3 + R4)}$$

gilt.

Bei den Widerstandselementen R1 bis R4 handelt es sich um druckabhängige Widerstandselemente, die jeweils als Dehnungsmessstreifen ausgebildet und in Dünnschicht-Technik aufgebracht sind. Die Widerstandselemente R1 bis R4 werden auf der Membran in der Regel derart angeordnet, dass mit steigender Druckdifferenz an der Membran der elektrische Widerstand der beiden in der Messbrücke 11 diagonal gegenüberliegenden Widerstandselemente R1 und R4 abnimmt, während der elektrische Widerstand der beiden in der Messbrücke 11 diagonal gegenüberliegenden Widerstandselemente R2 und R3 zunimmt.

Im Idealfall sind die elektrischen Widerstände der Widerstandselemente R1 bis R4 bei einer Druckdifferenz von Null identisch, d.h. die Brückenspannung U ist dann gleich Null. Sofern die Brückenspannung U bei einer Druckdifferenz an der Membran von Null jedoch einen von Null abweichenden Wert aufweist, wird dies - zumindest sofern die Messbrücke 11 nicht erheblich verstimmt ist - durch eine Auswerteeinheit kompensiert und auf diese Weise ein Nullabgleich erreicht.

Eine Änderung der an der Membran anliegenden Druckdifferenz führt zu einer entsprechenden Änderung der Brückenspannung U der Messbrücke 11. Aus der Brückenspannung U kann dann die an der Membran anliegende Druckdifferenz bzw. der Druck des die Membran beaufschlagenden Fluids bestimmt werden.

Um die Messbrücke 11 auf ihre korrekte Funktion hin zu überprüfen, kann an der Messbrücke 11 neben der Brückenspannung U auch noch eine Kontroll- oder Testspannung UT abgegriffen werden, d.h. es werden letztlich zwei Messsignale erzeugt. Hierzu werden zwei der vorgenannten Widerstandselemente R1 bis R4 der Messbrücke 11, deren Werte sich bei Belastung, d.h. bei Druckbeaufschlagung durch ein Fluid, in die gleiche Richtung ändern, mit einem zusätzlichen Spannungsabgriff versehen.

Der Kontrollabgriff ist in Form von zwei Kontrollanschlüssen 25, 27 realisiert. Der erste Kontrollanschluss 25 wirkt als Spannungsteiler und teilt das Widerstandselement R1 in zwei in Reihe geschaltete Widerstandskomponenten R12 und R11. Der zweite Kontrollanschluss 27 wirkt ebenfalls als Spannungsteiler und teilt das Widerstandselement R4 in zwei in Reihe geschaltete Widerstandskomponenten R41 und R42. Die Wheatstone'sche Messbrücke 11 weist daher insgesamt sechs Anschlüsse auf.

Für die Brückenspannung U am Messabgriff 17, 19 gilt folglich

$$U = U0 \frac{(R2 * R3) - \big((R41 + R42) * (R11 + R12)\big)}{(R11 + R12 + R2) * (R3 + R41 + R42)}$$

wohingegen die Kontrollspannung UT am Kontrollabgriff 25, 27 gemäß

$$UT = U0 \frac{(R2 + R12) * (R3 + R42) - R41 * R11}{(R11 + R12 + R2) * (R3 + R41 + R42)}$$

berechnet wird.

Bei korrekter Funktion der Messbrücke 11 bzw. des Druckmessumformers oder des Drucksensors ist - bei entsprechend gewählten Korrekturfaktoren *a* und *k* - die Gleichung

$$0 = U - a * UT + k$$

erfüllt.

Dabei beschreibt *k* einen Korrekturfaktor, der dem gegenüber dem Messabgriff 21, 23 veränderten Brückenoffset des Kontrollabgriffs 25, 27 Rechnung trägt, und *a* beschreibt einen Korrekturfaktor, der die veränderte Empimdlichkeit des Kontrollabgriffs 25, 27 berücksichtigt. Die beiden Korrektur- oder Anpassfaktoren *k* und *a* sind in Bezug auf die geforderte Genauigkeit der Kontrollschaltung konstant, insbesondere fluiddruck- und/oder temperaturunabhängig. Die Korrekturfaktoren *k* und *a* werden bei der Herstellung des Druckmessumformers bzw. des Drucksensors bestimmt und in einem darin enthaltenen Speicher hinterlegt.

Beschädigungen einzelner oder mehrerer Widerstandselemente R1 bis R4 oder sonstige lokale Veränderungen des Messbrücke 11 führen zu veränderten Korrekturfaktoren *k* und *a*, so dass bei einer eingestellten Brückenschaltung dann kein Differenzsignal Null gemäß der vorstehenden Gleichung erzeugt werden kann. Auf diese Weise ist ein Defekt in der Brückenschaltung detektierbar. Zur Überprüfung der korrekten Funktion der Brückenschaltung 11 werden die Brückenspannung U und die Kontrollspannung UT in der Auswerteinheit also gemäß der vorgenannten Gleichung miteinander verglichen.

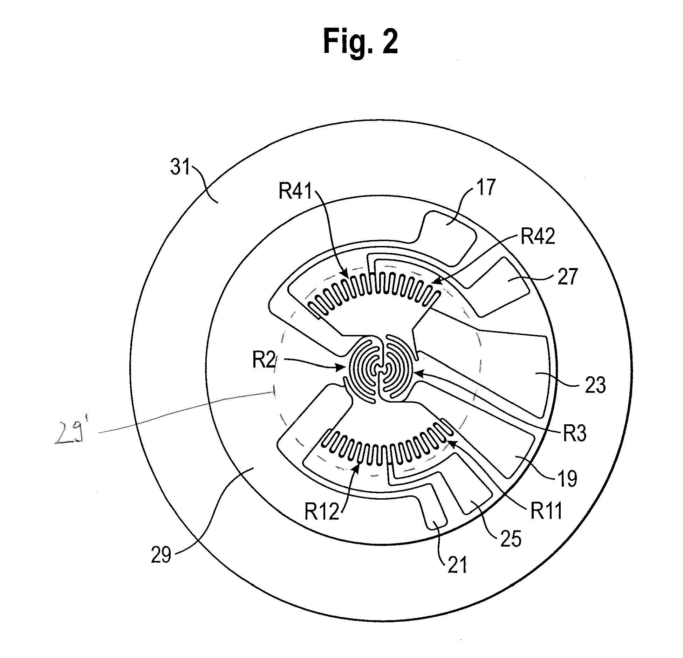

In Fig. 2 ist eine Membran 29 mit einer darauf aufgebrachten Wheatstone'sche Messbrücke 11 gemäß einem beispielhaften Layout gezeigt. Die Membran 29 ist mit einem starren Rahmen 31 einstückig ausgebildet. Unterhalb der Membran 29 ist in ein Fluidkanal für das Fluid, dessen Druck gemessen werden soll, ausgebildet. Die Bezugszeichen gemäß Fig. 2 sind analog zu den Bezugszeichen gemäß Fig. 1 gewählt. Gemäß einer anderen Ausführungsform kann der Übergang der Membran 29 zu dem Grundkörper 31 bzw. der Bereich, an dem die Membran 29 auf den Grundkörper 31 trifft, auch durch den Bereich 29' gegeben sein.

Die korrekte technische Funktion des erfindungsgemäßen Druckmessumformers mit redundanter Messbrücke kann - wie aus vorstehend Erläuterung ersichtlich ist - zuverlässig und mit vergleichsweise geringem Aufwand überprüft werden.

<u>Bezugszeichenliste</u>

| | |
|---|---|
| 11 | Messbrücke |
| 13 | Brückenzweig |
| 15 | Brückenzweig |
| 17 | Spannungsversorgungsanschluss |
| 19 | Masseanschluss |
| 21 | Messanschluss |
| 23 | Messanschluss |
| 25 | Kontrollanschluss |
| 27 | Kontrollanschluss |
| 29 | Membran |
| 31 | starrer Grundkörper |
| R1 | Widerstandselement |
| R2 | Widerstandselement |
| R3 | Widerstandselement |
| R4 | Widerstandselement |
| R11 | Widerstandskomponente |
| R 12 | Widerstandskomponente |
| R41 | Widerstandskomponente |
| R42 | Widerstandskomponente |
| UO | Versorgungsspannung |
| U | Brückenspannung |
| UT | Kontrollspannung |

**Patentansprüche**

1. Druckmessumformer zur Messung eines Fluiddrucks mit einer Membran (29), auf der eine Widerstands-Messbrücke (11), insbesondere eine Wheatstone'sche Messbrücke, mit druckabhängigen Widerstandselementen (R1, R2, R3, R4) aufgebracht ist, wobei die Messbrücke (11) zwei parallel geschaltete Brückenzweige (13, 15) mit jeweils zwei über einen jeweiligen Messanschluss (21, 23) in Reihe geschalteten Widerstandselementen (R2, R1; R4, R3) und einen zwischen den beiden Messanschlüssen (21, 23) ausgebildeten Messabgriff für eine Brückenspannung (U) umfasst,

   wobei in jedem Brückenzweig (13, 15) eines der beiden Widerstandselemente (R1; R4) zwei über einen jeweiligen Kontrollanschluss (25, 27) in Reihe geschaltete Widerstandskomponenten (R12, R11; R41, R42) aufweist, und zusätzlich ein zwischen den beiden Kontrollanschlüssen (25, 27) ausgebildeter Kontrollabgriff für eine Kontrollspannung (UT) vorgesehen ist,
wobei die beiden mit den Kontrollanschlüssen (25, 27) versehenen Widerstandselemente (R1; R4) eine gleichgerichtete Druckabhängigkeit aufweisen und die Widerstandselemente (R1, R2, R3, R4) als eine Dünnschicht aufgebracht sind.

2. Druckmessumformer nach Anspruch 1,
**dadurch gekennzeichnet,**
**dass** die beiden mit den Kontrollanschlüssen (25, 27) versehenen Widerstandselemente (R1; R4) im Ersatzschaltbild einander diagonal gegenüberliegend angeordnet sind.

3. Druckmessumformer nach einem der vorstehenden Ansprüche, **dadurch gekennzeichnet,**
**dass** jeweils die beiden im Ersatzschaltbild einander diagonal gegenüberliegend angeordneten Widerstandselemente (R1; R4) eine gleichgerichtete Druckabhängigkeit und/oder jeweils die beiden in demselben Brückenzweig (13, 15) angeordneten Widerstandselemente (R2, R1; R4, R3) eine entgegengerichtete Druckabhängigkeit aufweisen.

4. Druckmessumformer nach einem der vorstehenden Ansprüche, **dadurch gekennzeichnet,**
**dass** die druckabhängigen Widerstandselemente (R1, R2, R3, R4) jeweils als ein Dehnungsmessstreifen ausgebildet sind.

5. Drucksensor mit einem Druckmessumformer nach einem der vorstehenden Ansprüche.

6. Drucksensor nach Anspruch 5,
**dadurch gekennzeichnet,**
**dass** eine Auswerteeinheit vorgesehen ist, die dazu ausgebildet ist, die Brückenspannung (U) mit der Kontrollspannung (UT) zu vergleichen und anhand des Ergebnisses des Vergleichs die korrekte Funktion des Druckmessumformers zu überprüfen.

7. Drucksensor nach Anspruch 6,
**dadurch gekennzeichnet,**
**dass** der Vergleich anhand einer mathematischen Gleichung mit wenigstens einer Konstanten durchgeführt wird, die in der Auswerteeinheit hinterlegt ist/sind.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10114862 B3